# EUROPÄISCHE PATENTSCHRIFT

(11) **EP 2 265 452 B1**
(45) Veröffentlichungstag und Bekanntmachung des Hinweises auf die Patenterteilung: **04.03.2015**
(21) Anmeldenummer: 09720757.5
(22) Anmeldetag: 12.03.2009
(51) Int. Cl.: B60D 1/64, B62D 53/12, F16L 37/00, H01R 13/639

(54) **STECKERELEMENT ZUM VERBINDEN VON VERSORGUNGSLEITUNGEN FÜR FAHRZEUGTEILE**
PLUG ELEMENT FOR CONNECTING SUPPLY LINES FOR VEHICLE PARTS
ÉLÉMENT ENFICHABLE DESTINÉ À LA CONNEXION DE LIGNES D'ALIMENTATION POUR ÉLÉMENTS DE VÉHICULE

(30) Priorität: 13.03.2008 DE 102008014572
(43) Veröffentlichungstag der Anmeldung: 29.12.2010
(73) Patentinhaber: Jost-Werke GmbH, 63263 Neu-Isenburg (DE)
(72) Erfinder: ALGÜERA GALLEGO, José Manuel, 63739 Aschaffenburg (DE); EIERMANN, Michael, 64319 Pfungstadt (DE)
(74) Vertreter: Mehler Achler
(86) Internationale Anmeldenummer: PCT/EP2009/052940
(87) Internationale Veröffentlichungsnummer: WO 2009/112554

(56) Entgegenhaltungen:
- DE-A1-102004 024 333
- DE-U1- 9 000 214

## Beschreibung

Die Erfindung betrifft ein Steckerelement zum Verbinden von Versorgungsleitungen für Fahrzeugteile, in dessen Gehäuse mindestens ein Leitungselement mit einem daran ausgebildeten Fluidkontakt angeordnet ist, welcher in Wirkeingriff mit einem zweiten Steckerelement bringbar ist. Das Steckerelement kann erfindungsgemäß auch innerhalb eines Steckersystems verwirklicht sein.

Unter einem Fahrzeugteil werden allgemein Bestandteile von Lastzügen mit einem Zugfahrzeug und einem daran angekuppelten Anhängefahrzeug verstanden. Darüber hinaus sind auch einzelne Fahrzeugteile eines einzelnen Fahrzeugs angesprochen. Bei dem Anhängerfahrzeug kann es sich insbesondere um einen Sattelauflieger handeln, welcher mittels eines auf der Unterseite angeordneten Königszapfens formschlüssig in einer Sattelkupplung des Zugfahrzeugs verriegelbar ist.

Nach dem mechanischen Verbinden von Zugfahrzeug und Anhängerfahrzeug ist es notwendig, die üblicherweise an dem Zugfahrzeug bereitgehaltenen Versorgungsleitungen in dafür vorgesehene Anschlüsse des Anhängerfahrzeugs zu stecken, um eine Versorgung des Anhängerfahrzeugs mit Druckluft, Elektrizität und gegebenenfalls auch mit Steuersignalen sicherzustellen.

Aus dem Stand der Technik ist bekannt geworden, das Stecken der Versorgungsleitungen automatisiert mit einem Steckkupplungssystem vorzunehmen. Die DE 10 2004 024 333 A1 schlägt diesbezüglich vor, auf der Seite des Sattelaufliegers ein schwenkbar um den Königszapfen gelagertes Tragelement vorzusehen, an dessen Unterseite ein erstes Steckerelement angeordnet ist, welches bei Vorhandensein eines zugfahrzeugseitigen zweiten Steckerelementes beim Ankuppeln des Aufliegers in dieses eingreift und eine Verbindung der Steckerelemente herstellt. Das erste Steckerelement ist gegenüber dem Tragelement lateral verschiebbar gelagert und stützt sich gegenüber diesem mittels einer Schraubenfeder ab. Die miteinander in Wirkeingriff befindlichen Steckerelemente werden im Fahrbetrieb mit Druckluft beaufschlagt, wodurch Kräfte in Steckertrennrichtung resultieren. Daher ist es notwendig, die Steckerelement über die Druckkraft der Schraubenfeder in ihrer verbundenen Position zusammenzuhalten. Der wesentliche Nachteil des bekannten Steckkupplungssystems liegt darin, dass es bei einem Versagen der Schraubenfeder zu einem Separieren der Steckerelemente und den damit verbundenen Verkehrsunsicherheiten kommen kann.

Demzufolge lag der Erfindung die Aufgabe zugrunde, ein Steckerelement bereitzustellen, das ohne die Vorspannkraft eines Federelementes in einer betriebssicheren Stellung verbleibt.

Die Aufgabe wird erfindungsgemäß mit einem Steckerelement gelöst, bei dem das Gehäuse gegenüber einem ortsfesten Anschlusssockel lateral verschiebbar und der druckwirksame Flächenquerschnitt des Leitungselementes derart ausgebildet ist, dass beim Beaufschlagen mit Druckluft eine Kraft in Steckrichtung wirkt. Nach Eintritt eines quasistationären Betriebszustandes verhält sich das Leitungselement wie ein Kolben, welcher von zwei Seiten mit dem gleichen vorherrschenden pneumatischen Druck belastet ist. Aufgrund der seitens des Anschlusssockels gegenüber dem Fluidkontakt größer ausgeformten druckbelasteten Fläche, entsteht eine ebenfalls in Steckrichtung wirkende Kraftresultierende und drückt dadurch das Steckerelement gegen das zweite damit zusammenwirkende Steckerelement.

Vorteilhafterweise weist das Leitungselement gegenüber dem Anschlusssockel eine erste Dichtstelle auf, deren Durchmesser D₁ größer als der Durchmesser D₂ des Fluidkontakts ist. In zusammengefügtem Zustand der Steckerelemente wirkt die pneumatische Druckkraft unter anderem auf den druckwirksamen Flächenquerschnitt A_{D2} entsprechend der Wandstärke des Fluidkontakts im Bereich des Durchmessers D₂. In entgegengesetzter Richtung wirkt der pneumatische Druck jedoch auf einen größeren druckwirksamen Flächenquerschnitt A_{D1} des Leitungelements, dessen Betrag um das Quadrat aus der Differenz des größeren Durchmessers D₁ und des kleineren Durchmessers D₂ größer ist.

Aufgrund der quadratischen Abhängigkeit des druckwirksamen Flächenquerschnitts von dem Radius beziehungsweise Durchmesser, führen bereits geringe Vergrößerungen des äußeren Durchmessers D₁ zu einer erheblichen Vergrößerung der druckwirksamen Fläche. Aus dem konstantem Druck multipliziert mit einer quadratisch wachsenden Fläche ergibt sich demzufolge eine größere resultierende Kraft in Steckrichtung.

Vorzugsweise ist die erste Dichtstelle eine Elastomer- oder Kunststoffdichtung. Ebenso kann ein O-Ring als Dichtung verwendet werden. Der O-Ring ermöglicht insbesondere bei einem lateral beweglich in dem Anschlusssockel geführten Leitungselement eine gute Abdichtung gegenüber diesem. Aufgrund seines kreisrunden dichtenden Querschnitts wird diese Dichtfunktion auch bei einem verkantet in den Anschlusssockel eintretenden Leitungselement beibehalten.

Gemäß einer besonders günstigen Ausgestaltung ist das Leitungselement ortsfest an dem Gehäuse befestigt. Hierdurch wird die in Steckrichtung wirkende Vorschubkraft des Leitungselementes auf das Gehäuse übertragen. Unter einer ortsfesten Befestigung wird auch eine nachgiebige Befestigung zur Überwindung fertigungstechnisch bedingter Toleranzen verstanden.

Zweckmäßigerweise wirkt auf das Gehäuse ein Federelement, das vorzugsweise zwischen dem Gehäuse und dem Anschlusssockel angeordnet ist. Das Federelement ist besonders vor dem Kontaktieren der Steckerelemente wichtig, da unter Umständen in diesem Stadium noch keine pneumatische Druckkraft innerhalb des Steckerelementes wirkt. Eine Vorschubkraft ist jedoch für den Steckvorgang, das heißt das Eindringen des Fluidkontakts in das zweite Steckerelement, notwendig und wird vorteilhafterweise von dem Federelement aufgebracht. Nach einem Verbinden der Steckerelemente ist das Federelement aufgrund des dann auf die druckwirksamen Flächenquerschnitte wirkenden pneumatischen Drucks entlastet.

Das Federelement kann beispielsweise koaxial auf einer zwischen dem Gehäuse und dem Anschlusssockel verlaufenden Führungsschiene angeordnet sein. Diese sorgt für eine laterale Führung des Gehäuses gegenüber dem Anschlusssockel. Darüber hinaus umfasst die Führungsschiene einen Endanschlag, der den Verfahrweg des Gehäuses beschränkt.

Vorteilhafterweise sind an dem Gehäuse elektrische Kontakte angeordnet. Somit wird nicht nur eine betriebssichere Fluid-Verbindung, sondern auch eine elektrische Verbindung zwischen dem Zugfahrzeug und dem Anhängerfahrzeug hergestellt.

Die Erfindung ist auch an einem Steckersystem verwirklicht, welches ein mit dem ersten Steckerelement zusammenwirkendes zweites Steckerelement umfasst, wobei das erste Steckerelement einem Zugfahrzeug und das zweite Steckerelement einem Anhängerfahrzeug zugeordnet ist, wobei das Anhängerfahrzeug ein Sattelauflieger ist. Die Zuordnung des ersten Steckerelementes an das Zugfahrzeug hat den Vorteil, dass das erste Steckerelement permanent mit Druckluft beaufschlagt ist und sich dadurch der Fluidkontakt bereits vor dem Ankuppeln des Aufliegers in einer maximal ausgefahrenen Position befindet. Zusätzliche Federelemente sind bei dieser Ausführungsform nicht zwingend notwendig.

Es ist auch möglich, das erste Steckerelement einem Anhängerfahrzeug und das zweite Steckerelement einem Zugfahrzeug zuzuordnen, wobei das Anhängerfahrzeug ein Sattelauflieger ist.

Günstigerweise ist das erste oder zweite Steckerelement unterhalb der Einfahröffnung einer Sattelkupplung und das zweite oder erste Steckerelement an einem schwenkbar um einen Königszapfen des Sattelaufliegers gelagerten Tragelement angeordnet. Bei dieser Anordnung erfolgt eine Kontaktierung der Steckerelemente mit dem mechanischen Ankuppeln des Königszapfens in der Sattelkupplung. Die Anordnung unterhalb der Einfahröffnung ermöglicht ein Übergleiten des Königszapfens über das jeweilige darunter befindliche Steckerelement, ohne, dass dieses vom Königszapfen beschädigt wird.

Vorzugsweise ist das zugfahrzeugseitige Steckerelement ortsfest an der Sattelkupplung angeordnet. Dadurch vollzieht das Steckerelement den gleichen Bewegungsumfang wie die Sattelkupplung und der Auflieger beziehungsweise das daran befestigte Tragelement mit dem komplementären Steckerelement Relativbewegungen zwischen den beiden Steckerelementen werden dadurch verringert.

Vorteilhafterweise weist das zweite Steckerelement auf der dem ersten Steckerelement zugewandten Seite mindestens eine Kontaktbuchse auf, welche mit dem darin eingreifenden Fluidkontakts eine zweite Dichtstelle bildet. Das erste und zweite Steckerelement sollten sich unmittelbar vor dem Ankuppeln gegenüberstehen und dadurch ein störungsfreies Eingreifen der Fluidkontakte in die zugehörigen Kontaktbuchsen gewährleisten.

Zweckmäßigerweise weist die Kontaktbuchse einen Innendurchmesser auf, der geringfügig größer als der Durchmesser D₂ ausgeformt ist. Hierdurch resultiert neben einem geringen Bauraum eine günstige Abdichtung zwischen der Kontaktbuchse und dem darin befindlichen Fluidkontakt. Hierfür sollte zusätzlich in der Kontaktbuchse ein Dichtelement angeordnet sein.

Zum besseren Verständnis wird die Erfindung nachfolgend anhand von drei Figuren näher erläutert:
- **Fig. 1:**: eine Draufsicht auf ein erstes und zweites Steckerelement;
- **Fig. 2:**: einen Längs- und einen Querschnitt durch ein Leitungselement sowie
- **Fig. 3:**: eine Seitenansicht auf ein an einem Zugfahrzeug und einem Auflieger angebrachtes Steckersystem.

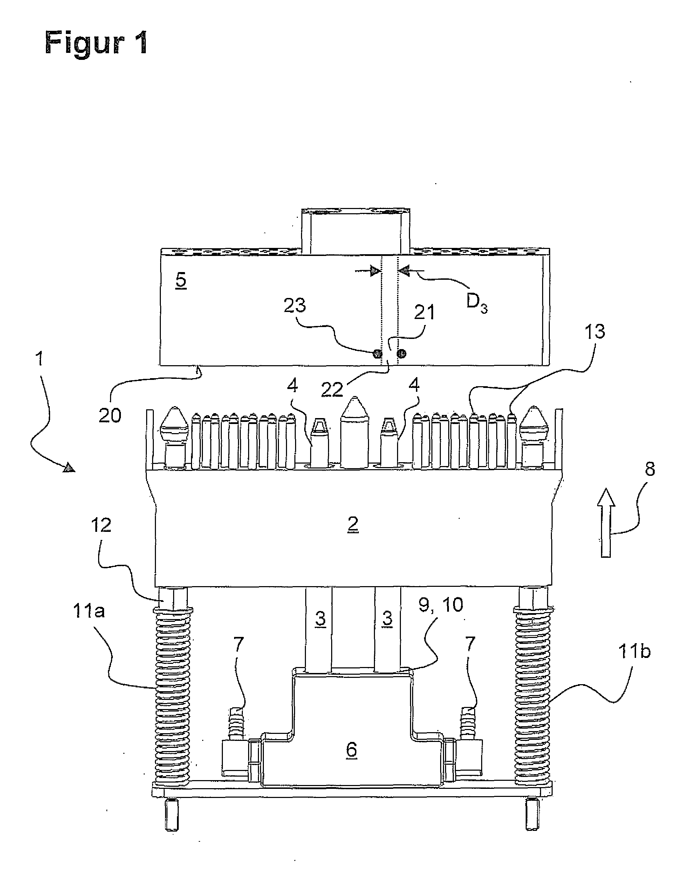

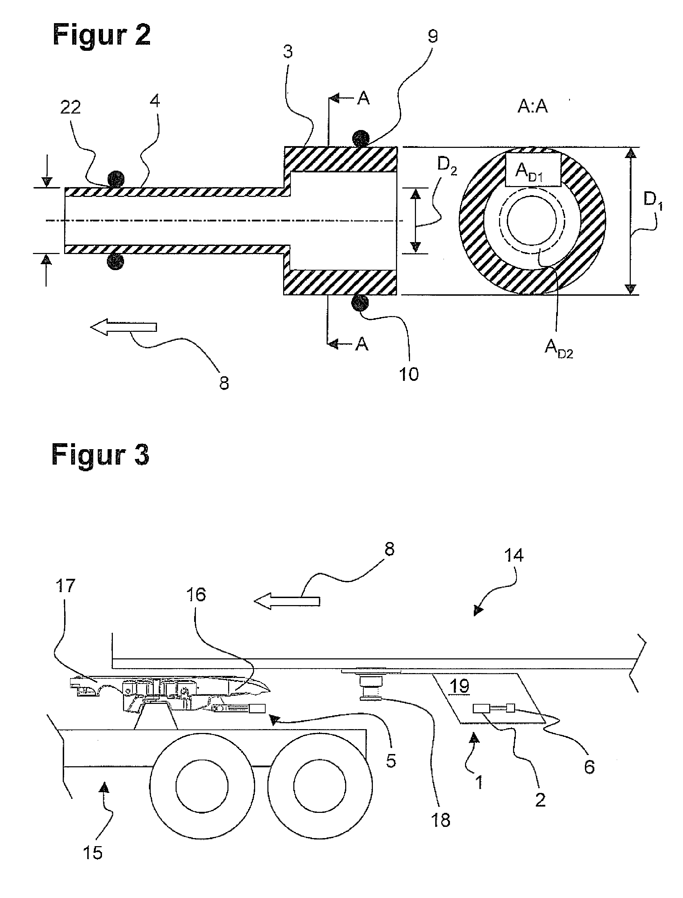

Die Figur 1 zeigt in einer Draufsicht ein Steckerelement 1 und ein diesem gegenüberstehendes zweites Steckerelement 5, wobei das Steckerelement 5 an einem Zugfahrzeug 14 (siehe Figur 3) und das Steckerelement 1 an einem Anhängefahrzeug 15 in Form eines Sattelaufliegers angeordnet ist. Grundsätzlich ist die Zuordnung des jeweiligen Steckerelementes 1, 5 zu dem Zugfahrzeug 14 oder dem Anhängerfahrzeug 15 austauschbar, wobei die Anordnung des ersten Steckerelementes 1 auf dem Zugfahrzeug aufgrund der permanenten Beaufschlagung mit Druckluft bevorzugt ist.

Das Steckerelement 1 ist zweiteilig aufgebaut und weist ein in Steckrichtung 8 vorne liegendes Gehäuse 2 und einen dahinter befindlichen Anschlusssockel 6 auf. An der zum zweiten Steckerelement 5 gerichteten Seite des Gehäuses 2 stehen zwei Fluidkontakte 4 vor, die ihren äußeren Durchmesser innerhalb des Gehäuses 2 vergrößern und dieses als Leitungselement 3 verlassen.

Neben den Fluidkontakten 4 sind in dem Gehäuse 2 außerdem noch eine Vielzahl elektrischer Kontakte 13 angeordnet, welche der Übertragung von elektrischer Energie und Steuersignalen zum Beispiel für ein Bus-System dienen.

Um eine möglichst strömungsgünstige Leitung der Druckluft durch die Leitungselemente 3 zu gewährleisten, sollte der Innendurchmesser des Leitungselements 3 von dem jeweiligen Fluidkontakt 4 bis zu dem Anschlusssockel 6 konstant sein.

Die beiden Leitungselemente 3 sind ortsfest an dem Gehäuse 2 befestigt und beweglich innerhalb des Anschlusssockels 6 gelagert. Im Bereich des Eintritts des Leitungselements 3 in den Anschlusssockel 6 befindet sich eine erste Dichtstelle 9, die vorzugsweise aus einer Elastomer- oder Kunststoffdichtung 10 gebildet und besonders gut in der Darstellung der Figur 2 zu erkennen ist.

Die beiden Leitungselemente 3 verlaufen in Steckrichtung 8 von dem Anschlusssockel 6 bis zu dem Gehäuse 2 parallel zueinander. An dem Anschlusssockel 6 sind außerdem zwei Anschlussstutzen 7 zu erkennen, an denen eine hier nicht gezeigte aufliegerseitige Versorgungsleitung anschließbar ist.

Beide Fluidkontakte 4 greifen beim Zusammenführen des ersten und zweiten Steckerelementes 1, 5 in gegenüberliegende Kontaktbuchsen 21 des zweiten Steckerelements 5 ein. Diese befinden sich auf der dem Steckerelement 1 zugewandten Seite 20 des zweiten Steckerelements 5, wobei in der Figur 1 nur eine Kontaktbuchse 21 schematisch dargestellt ist.

Jede der Kontaktbuchsen 21 weist außerdem an seiner inneren Wandung eine zweite Dichtstelle 22 auf, welche bei Vorhandensein eines Fluidkontakts 4 innerhalb der Kontaktbuchse 21 dessen äußere Umfangsfläche mittels eines Dichtelementes 23 abdichtet. Als Dichtelement 23 eignet sich ebenfalls eine Elastomer- oder Kunststoffdichtung oder ein O-Ring. Der Innendurchmesser D₃ der Kontaktbuchse 21 ist nur geringfügig größer gewählt als der Außendurchmesser D₂ (siehe Figur 2) des Fluidkontakts 4, so dass eine besonders verlustarme Abdichtung erfolgen kann.

Auf beiden Seiten des Anschlusssockels 6 ist das Gehäuse 2 zusätzlich gegenüber diesem mit Federelementen 11a, 11b abgestützt, die axial auf Führungsschienen 12 aufgeschoben sind. Die Führungsschienen 12 wiederum lassen eine axiale Bewegung des Gehäuses 2 in einem vorgegebenen Bewegungsumfang zu.

Nach dem Zusammenführen der beiden Steckerelemente 1, 5 erfolgt ein Druckaufbau innerhalb des Leitungselements 3 und des nachgeschalteten Druckluftkreislaufs. Ein einzelnes Leitungselement 3 ist in einem Längs- und Querschnitt in Figur 2 dargestellt. Hierbei wird deutlich, dass als druckwirksamer Flächenquerschnitt A_{D2} lediglich die Wandstärke des Fluidkontakts 4 eine Rolle spielt. Der Flächenquerschnitt A_{D2} entspricht in der Querschnittsdarstellung dem inneren konzentrischen Kreis. Auf der gegenüberliegenden Seite im Bereich des durchmessergrößeren Leitungselements 3 trifft die Druckluft auf einen größeren druckwirksamen Flächenquerschnitt A_{D1}, so dass eine resultierende Vorschubkraft in Steckrichtung 8 ein Verfahren des Leitungselements 3 mit dem daran angeordneten Gehäuse 2 gegenüber dem ortsfesten Anschlusssockel 6 bewirkt.

Der druckwirksame Flächenquerschnitt A_{D1} ist um das Quadrat der Differenz des Durchmessers D₁ zu dem Durchmesser D₂ größer. In der Querschnittsdarstellung der Figur 2 entspricht der druckwirksame Flächenquerschnitt A_{D1} der schraffierten Fläche und der daran angrenzenden unschraffierten Fläche bis zu dem mit einer unterbrochenen Linie dargestellten Kreis entsprechend dem äußeren Durchmesser D₂ der Umfangswand des Fluidkontakts 4.

Die Figur 3 zeigt in einer Seitenansicht die Anordnung beider Steckerelemente 1, 5 an einem Sattelzug mit einem Zugfahrzeug 14 und einem Sattelauflieger 15. Das Zugfahrzeug 14 trägt im Heckbereich eine Sattelkupplung 17 mit einer nach hinten konisch aufgeweiteten Einfahröffnung 16. Zum Ankuppeln des Sattelaufliegers 15 fährt das Zugfahrzeug 14 rückwärts an diesen heran bis ein auf der Unterseite des Sattelaufliegers 15 vorstehender Königszapfen 18 von der Einfahröffnung 16 erfasst und bis zum Erreichen seiner Verriegelungsstellung in dieser geführt wird.

An dem Königszapfen 18 greift schwenkbar ein Tragelement 19 an, welches das Steckerelement 1 bereithält. Beim weiteren Zusammenfahren von Zugfahrzeug 14 und Sattelauflieger 15 kommt das Steckerelement 1 in Wirkeingriff mit dem an der Sattelkupplung 17 befestigten zweiten Steckerelement 5. Dieses befindet sich unterhalb des Niveaus der Einfahröffnung 16.

### Bezugszeichenliste

- 1: Steckelement, erstes Steckerelement
- 2: Gehäuse
- 3: Leitungselement
- 4: Fluidkontakt
- 5: zweites Steckerelement
- 6: Anschlusssockel
- 7: Anschlussstutzen
- 8: Steckrichtung
- 9: erste Dichtstelle
- 10: Elastomer- oder Kunststoffdichtung
- 11a,b: Federelement
- 12: Führungsschiene
- 13: elektrische Kontakte
- 14: Zugfahrzeug
- 15: Anhängerfahrzeug, Sattelauflieger
- 16: Einfahröffnung Sattelkupplung
- 17: Sattelkupplung
- 18: Königszapfen
- 19: Tragelement
- 20: Steckerelement zugewandte Seite
- 21: Kontaktbuchse
- 22: zweite Dichtstelle
- 23: Dichtelement
- D₁: Außendurchmesser Leitungselement erste Dichtstelle
- D₂: Außendurchmesser Fluidkontakt
- D₃: Innendurchmesser Kontaktbuchse
- A_{D1}: druckwirksamer Flächenquerschnitt bezogen auf D₁
- A_{D2}: druckwirksamer Flächenquerschnitt bezogen auf D₂

## Patentansprüche

1. Steckerelement (1) zum Verbinden von Versorgungsleitungen, in dessen Gehäuse (2) mindestens ein Leitungselement (3) mit einem daran ausgebildeten Fluidkontakt (4) angeordnet ist, welcher in Wirkeingriff mit einem zweiten Steckerelement (5) bringbar ist,
**dadurch gekennzeichnet,**
**dass** das Gehäuse (2) gegenüber einem ortsfesten Anschlusssockel (6) verschiebbar und der druckwirksame Flächenquerschnitt (A_{D1}, A_{D2}) des Leitungselements (3) derart ausgebildet ist, dass beim Beaufschlagen mit Druckluft eine resultierende Kraft in Steckrichtung (8) wirkt.

2. Steckerelement (1) nach Anspruch 1, **dadurch gekennzeichnet, dass** das Leitungselement (3) gegenüber dem Anschlusssockel (6) eine erste Dichtstelle (9) aufweist, deren druckwirksamer Flächenquerschnitt (A_{D1}) größer als der druckwirksame Flächenquerschnitt (A_{D2}) des Fluidkontakts (4) ist.

3. Steckerelement (1) nach Anspruch 2, **dadurch gekennzeichnet, dass** die erste Dichtstelle (9) eine Elastomer- oder Kunststoffdichtung (10) ist.

4. Steckerelement (1) nach einem der Ansprüche 1 bis 3, **dadurch gekennzeichnet, dass** das Leitungselement (3) ortsfest an dem Gehäuse (2) befestigt ist.

5. Steckerelement (1) nach einem der Ansprüche 1 bis 4, **dadurch gekennzeichnet, dass** das Leitungselement (3) beweglich in dem Anschlusssockel (6) geführt ist.

6. Steckerelement (1) nach einem der Ansprüche 1 bis 5, **dadurch gekennzeichnet, dass** auf das Gehäuse (2) ein Federelement (11 a, 11 b) einwirkt.

7. Steckerelement (1) nach Anspruch 6, **dadurch gekennzeichnet, dass** das Federelement (11 a, 11b) zwischen dem Gehäuse (2) und dem Anschlusssockel (6) angeordnet ist.

8. Steckerelement (1) nach Anspruch 6 oder 7, **dadurch gekennzeichnet, dass** das Federelement (11 a, 11 b) parallel auf einer zwischen Gehäuse (2) und Anschlusssockel (6) verlaufenden Führungsschiene (12) angeordnet ist.

9. Steckerelement (1) nach einem der Ansprüche 1 bis 8, **dadurch gekennzeichnet, dass** an dem Gehäuse (2) elektrische Kontakte (13) angeordnet sind.

10. Steckersystem umfassend ein erstes Steckerelement (1) nach einem der Ansprüche 1 bis 9 und ein damit zusammenwirkendes zweites Steckerelement (5), **dadurch gekennzeichnet, dass** das erste Steckerelement (1) einem Zugfahrzeug (14) und das zweite Steckerelement (5) einem Anhängerfahrzeug (15) zugeordnet ist.

11. Steckersystem umfassend ein erstes Steckerelement (1) nach einem der Ansprüche 1 bis 9 und ein damit zusammenwirkendes zweites Steckerelement (5), **dadurch gekennzeichnet, dass** das erste Steckerelement (1) einem Anhängerfahrzeug (15) und das zweite Steckerelement (5) einem Zugfahrzeug (14) zugeordnet ist.

12. Steckersystem nach Anspruch 10 oder 11, **dadurch gekennzeichnet, dass** das erste oder zweite Steckerelement (1, 5) unterhalb der Einfahröffnung (16) einer Sattelkupplung (17) und das zweite oder erste Steckerelement (5, 1) an einem schwenkbar um einen Königszapfen (18) des Sattelaufliegers (15) gelagerten Tragelement (19) angeordnet ist.

13. Steckersystem nach Anspruch 12, **dadurch gekennzeichnet, dass** das erste oder zweite Steckerelement (1, 5) ortsfest an der Sattelkupplung (17) angeordnet ist.

14. Steckersystem nach einem der Ansprüche 10 bis 13, **dadurch gekennzeichnet, dass** das erste Steckerelement (1) und das zweite Steckerelement (5) unmittelbar vor dem Ankuppeln gegenüberstehen.

15. Steckersystem nach einem der Ansprüche 10 bis 14, **dadurch gekennzeichnet, dass** das zweite Steckerelement (5) auf der dem ersten Steckerelement (1) zugewandten Seite (20) mindestens eine Kontaktbuchse (21) aufweist, welche mit dem darin eingreifenden Fluidkontakt (4) eine zweite Dichtstelle (22) bildet.

16. Steckersystem nach Anspruch 15, **dadurch gekennzeichnet, dass** die Kontaktbuchse (21) einen Innendurchmesser (D₃) aufweist, der geringfügig größer als der Durchmesser (D₂) ausgeformt ist.

17. Steckersystem nach Anspruch 15 oder 16, **dadurch gekennzeichnet, dass** in der Kontaktbuchse (21) ein Dichtelement (23) angeordnet ist.

## Claims

1. Plug element (1) for connecting supply lines, in the housing (2) of which at least one line element (3) is arranged with a fluid contact (4) which is formed thereon
and which can be brought into operational engagement with a second plug element (5),
**characterised in that**
the housing (2) can be moved with respect to a fixed connection base (6) and the pressure-active surface cross-section (A_{D1}, A_{D2}) of the line element (3) is constructed in such a manner that, when acted on with compressed air, a resulting force acts in the insertion direction (8).

2. Plug element (1) according to claim 1, **characterised in that** the line element (3) has with respect to the connection base (6) a first sealing location (9) whose pressure-active surface cross-section (A_{D1}) is greater than the pressure-active surface cross-section (A_{D2}) of the fluid contact (4).

3. Plug element (1) according to claim 2, **characterised in that** the first sealing location (9) is an elastomer or plastics seal (10).

4. Plug element (1) according to any one of claims 1 to 3, **characterised in that** the line element (3) is secured to the housing (2) in a fixed manner.

5. Plug element (1) according to any one of claims 1 to 4, **characterised in that** the line element (3) is movably guided in the connection base (6).

6. Connector element (1) according to any one of claims 1 to 5, **characterised in that** a resilient element (11a, 11b) acts on the housing (2).

7. Plug element (1) according to claim 6, **characterised in that** the resilient element (11a, 11b) is arranged between the housing (2) and the connection base (6).

8. Plug element (1) according to claim 6 or claim 7, **characterised in that** the resilient element (11a, 11b) is arranged in a parallel manner on a guide rail (12) which extends between the housing (2) and connection base (6).

9. Plug element (1) according to any one of claims 1 to 8, **characterised in that** electrical contacts (13) are arranged on the housing (2).

10. Plug system comprising a first plug element (1) according to any one of claims 1 to 9 and a second plug element (5) which cooperates therewith, **characterised in that** the first plug element (1) is associated with a pulling vehicle (14) and the second plug element (5) is associated with a trailer vehicle (15).

11. Plug system comprising a first plug element (1) according to any one of claims 1 to 9 and a second plug element (5) which cooperates therewith, **characterised in that** the first plug element (1) is associated with a trailer vehicle (15) and the second plug element (5) is associated with a pulling vehicle (14).

12. Plug system according to claim 10 or claim 11, **characterised in that** the first or second plug element (1, 5) is arranged below the insertion opening (16) of a fifth wheel (17) and the second or first plug element (5, 1) is arranged on a carrier element (19) which is supported so as to be able to be pivoted about a kingpin (18) of the semi-trailer (15).

13. Plug system according to claim 12, **characterised in that** the first or second plug element (1, 5) is arranged in a fixed manner on the fifth wheel (17).

14. Plug system according to any one of claims 10 to 13, **characterised in that** the first plug element (1) and the second plug element (5) face each other directly before coupling.

15. Plug system according to any one of claims 10 to 14, **characterised in that** the second plug element (5) has at the side (20) facing the first plug element (1) at least one contact socket (21) which forms a second sealing location (22) with the fluid contact (4) which engages therein.

16. Plug system according to claim 15, **characterised in that** the contact socket (21) has an inner diameter (D₃) which is formed so as to be slightly greater than the diameter (D₂).

17. Plug system according to claim 15 or 16, **characterised in that** a sealing element (23) is arranged in the contact socket (21).

## Revendications

1. Elément de connecteur (1) pour la connexion de conduites d'alimentation, dans le boîtier (2) duquel est disposé au moins un élément de conduite (3) avec un contact à fluide (4) formé dessus, lequel peut être mis en contact coopérant avec un deuxième élément de connecteur (5),
**caractérisé en ce**
**que** le boîtier (2) peut coulisser par rapport à un socle de raccordement fixe (6) et la surface de section transversale (A_{D1}, A_{D2}) active sous pression de l'élément de conduite (3) est formée de façon que l'application d'air comprimé produise une force résultante dans la direction d'enfichage (8).

2. Elément de connecteur (1) selon la revendication 1, **caractérisé en ce que** l'élément de conduite (3) présente par rapport au socle de raccordement (6) une première zone d'étanchéité (9) dont la surface de section transversale (A_{D1}) active sous pression est plus grande que la surface de section transversale (A_{D2}) active sous pression du contact à fluide (4).

3. Elément de connecteur (1) selon la revendication 2, **caractérisé en ce que** la première zone d'étanchéité (9) est un joint en élastomère ou en matière plastique (10).

4. Elément de connecteur (1) selon l'une des revendications 1 à 3, **caractérisé en ce que** l'élément de conduite (3) est fixé à demeure sur le boîtier (2).

5. Elément de connecteur (1) selon l'une des revendications 1 à 4, **caractérisé en ce que** l'élément de conduite (3) est guidé de manière mobile dans le socle de raccordement (6).

6. Elément de connecteur (1) selon l'une des revendications 1 à 5, **caractérisé en ce qu'**un élément élastique (11a, 11b) agit sur le boîtier (2).

7. Elément de connecteur (1) selon la revendication 6, **caractérisé en ce que** l'élément élastique (11a, 11b) est disposé entre le boîtier (2) et le socle de raccordement (6).

8. Elément de connecteur (1) selon la revendication 6 ou 7, **caractérisé en ce que** l'élément élastique (11a, 11b) est disposé parallèlement sur un rail de guidage (12) s'étendant entre le boîtier (2) et le socle de raccordement (6).

9. Elément de connecteur (1) selon l'une des revendications 1 à 8, **caractérisé en ce que** des contacts électriques (13) sont disposés sur le boîtier (2).

10. Système de connecteur comprenant un premier élément de connecteur (1) selon l'une des revendications 1 à 9 et un deuxième élément de connecteur (5) coopérant avec celui-ci, **caractérisé en ce que** le premier élément de connecteur (1) est associé à un véhicule tracteur (14) et le deuxième élément de connecteur (5) à un véhicule remorqué (15).

11. Système de connecteur comprenant un premier élément de connecteur (1) selon l'une des revendications 1 à 9 et un deuxième élément de connecteur (5) coopérant avec celui-ci, **caractérisé en ce que** le premier élément de connecteur (1) est associé à un véhicule remorqué (15) et le deuxième élément de connecteur (5) à un véhicule tracteur (14).

12. Système de connecteur selon la revendication 10 ou 11, **caractérisé en ce que** le premier ou deuxième élément de connecteur (1, 5) est disposé au-dessous de l'ouverture d'introduction (16) d'une sellette d'attelage (17) et le deuxième ou premier élément de connecteur (5, 1) est disposé sur un élément de support (19) monté pivotant autour d'un pivot central (18) de la semi-remorque (15).

13. Système de connecteur selon la revendication 12, **caractérisé en ce que** le premier ou deuxième élément de connecteur (1, 5) est disposé à demeure sur la sellette d'attelage (17).

14. Système de connecteur selon l'une des revendications 10 à 13, **caractérisé en ce que** le premier élément de connecteur (1) et le deuxième élément de connecteur (5) se font face immédiatement avant l'accouplement.

15. Système de connecteur selon l'une des revendications 10 à 14, **caractérisé en ce que** le deuxième élément de connecteur (5) présente du côté (20) tourné vers le premier élément de connecteur (1) au moins une douille de contact (21) qui forme avec le contact à fluide (4) qui s'y engage une deuxième zone d'étanchéité (22).

16. Système de connecteur selon la revendication 15, **caractérisé en ce que** la douille de contact (21) présente un diamètre intérieur (D₃) qui est formé légèrement plus grand que le diamètre extérieur (D₂).

17. Système de connecteur selon la revendication 15 ou 16, **caractérisé en ce qu'**un élément d'étanchéité (23) est disposé dans la douille de contact (21).
